# EUROPEAN PATENT SPECIFICATION

(11) **EP 3 309 593 B1**
(45) Date of publication and mention of the grant of the patent: **25.08.2021**
(21) Application number: 15894705.1
(22) Date of filing: 24.07.2015
(51) Int. Cl.: G02B 6/42

(54) **QSFP+ MODULE HOT-PLUGGABLE UNLOCKING STRUCTURE**
HEISS STECKBARE ENTRIEGELUNGSSTRUKTUR FÜR QSFP+-MODUL
STRUCTURE DE DÉVERROUILLAGE ENFICHABLE À CHAUD DE MODULE QSFP+

(30) Priority: 09.06.2015 CN 201520393482 U
(43) Date of publication of application: 18.04.2018
(73) Proprietor: O-Net Communications (Shenzhen) Limited, Pingshan New District Shenzhen Guangdong 518118 (CN)
(72) Inventor: ZHU, Peiwen, Shenzhen Guangdong 518118 (CN); ZENG, Zhaofeng, Shenzhen Guangdong 518118 (CN)
(74) Representative: Li, Xiaolu
(86) International application number: PCT/CN2015/085072
(87) International publication number: WO 2016/197437

(56) References cited:
- WO-A1-2013/023356
- CN-U- 201 749 226
- CN-U- 201 804 145
- CN-U- 201 820 017
- CN-U- 203 218 595
- US-A1- 2005 018 979
- US-A1- 2005 226 587

## Description

### TECHNICAL FIELD

The present invention relates to the field of optoelectronic communications transmission technologies, and specifically, to a QSFP+ module straight-pull unlocking structure.

### BACKGROUND

As a large-scale data center imposes increasingly high requirements on a data transmission rate, a transmission rate of related matching optical module connectors is also increased correspondingly, and various 4x28G quad small form-factor pluggable optical transceiver module products emerge. One manner is to separate a cable from a module by using an MTP optical connector, and this manner is applied to products of 28G Quad Small Form-factor Pluggable Plus (QSFP+) Short Reach Lane 4 (SR4) modules and 28G QSFP+ Parallel Single Mode Lane 4 (PSM4) modules.

At present, a straight-pull unlocking structure is widely applied to the QSFP+ modules. However, the existing straight-pull unlocking structure has a complex structure, a complex manufacturing process, and high costs.

CN 203218595 U discloses an electrical connector assembly comprising a metal housing, a circuit board assembled on the metal housing and an unlocking mechanism capable of moving back and forth. The unlocking mechanism is capable of automatically moving forwards under elastic forces of the torsion springs, thereby ensuring that the unlocking mechanism works reliably.

WO 2013/023356 A1 discloses a plug-type connector comprising a displaceable locking and unlocking apparatus, which exerts a constant pressure on the apparatus by means of a double-sided torsion spring according to the preamble of claim 1.

### SUMMARY

Atechnical issue to be resolved by the present invention is to provide a QSFP+ module straight-pull unlocking structure to overcome the foregoing prior-art disadvantages. This overcomes disadvantages of the existing straight-pull unlocking structure: a complex structure, a complex manufacturing process, and high costs.

The technical solution used in the present invention to resolve the technical issue is to provide a QSFP+ module straight-pull unlocking according to claim 1.

In a further preferred solution of the present invention, the upper cover is provided with a spring groove, a middle portion of the spring groove is provided with a positioning pin, the spring is a torsion spring with a helical center hole, and the torsion spring is sheathed on the positioning pin.

In a further preferred solution of the present invention, press-fit element grooves are further provided in the spring groove, and bottoms of the press-fit elements are located in the press-fit element grooves.

In a further preferred solution of the present invention, spacing grooves are further provided on the two sides of the housing, the spacing grooves are connected to the guiding grooves, spacing projections are provided on side surfaces of the unlocking pieces, and the spacing projections are engaged with and provided in the spacing grooves.

In a further preferred solution of the present invention, unlocking projections are provided at the ends of the unlocking pieces.

In a further preferred solution of the present invention, a pull-tab sleeve is provided around the pull tab, the pull tab is enclosed in the pull-tab sleeve, and a streamlined curved surface is disposed at the rear end of the pull-tab sleeve.

A beneficial effect of the present invention lies in that: the housing is formed by the upper cover and the lower cover that are buckled to each other, the locking component is provided on the housing, the spring is provided on the upper cover, the press-fit elements are provided on the locking component and protrude towards the upper cover, and the press-fit elements and the spring are pressed against each other. In addition, the guiding grooves are provided on the two sides of the housing, the two unlocking pieces are provided at one end of the locking component and the pull tab is provided at the other end thereof, and the unlocking pieces are engaged with and provided in the guiding grooves. This simplifies a pull-tab unlocking structure and a manufacturing process thereof, and helps reduce costs.

### BRIEF DESCRIPTION OF DRAWINGS

The present invention is further described with reference to the embodiments and the accompany drawings in which:
FIG. 1 is a schematic assembly diagram of a QSFP+ module straight-pull unlocking structure according to the present invention;
FIG. 2 is a schematic diagram of an overall structure of a locking component, a pull tab, and unlocking pieces according to the present invention;
FIG. 3 is a partially enlarged schematic diagram of press-fit elements on a locking component according to the present invention;
FIG. 4 is a partially enlarged schematic diagram of a spring groove on an upper cover according to the present invention;
FIG. 5 is a partial perspective view of positions at which press-fit elements and a torsion spring are pressed against each other according to the present invention;
FIG. 6 is a partially enlarged schematic diagram of a spacing groove on a housing according to the present invention;
FIG. 7 is a schematic diagram of a position of a spacing projection when a QSFP+ module straight-pull unlocking structure is in an unlocked state according to the present invention;
FIG. 8 is a schematic diagram of a position of a spacing projection when a QSFP+ module straight-pull unlocking structure is in a locked state according to the present invention;
FIG. 9 is a schematic diagram of a position of a locking component when a QSFP+ module straight-pull unlocking structure is in an unlocked state according to the present invention;
FIG. 10 is a schematic diagram of a position of a locking component when a QSFP+ module straight-pull unlocking structure is in a locked state according to the present invention;
FIG. 11 is a schematic 3D structural diagram of a QSFP+ module straight-pull unlocking structure that is locked in a cage receptacle according to the present invention;
FIG. 12 is a schematic diagram of a position of a spring clip when a QSFP+ module straight-pull unlocking structure is in a locked state according to the present invention;
FIG. 13 is a schematic diagram of a position of a spring clip when a QSFP+ module straight-pull unlocking structure is in an unlocked state according to the present invention; and
FIG. 14 is a schematic 3D structural diagram of a pull-tab sleeve according to the present invention.

### DESCRIPTION OF EMBODIMENTS

Herein, exemplary embodiments of the present invention are described in detail with reference to the accompanying drawings. A QSFP+ module straight-pull unlocking structure in the embodiments conforms to the MSA protocol.

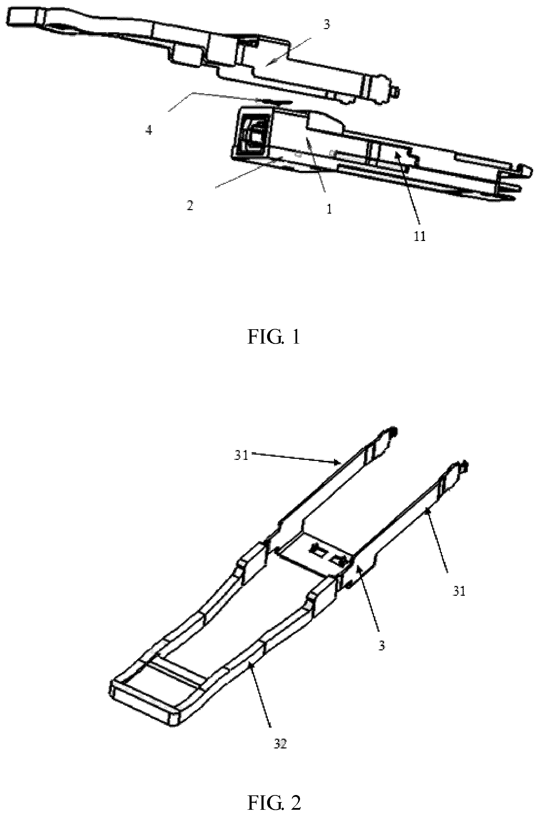

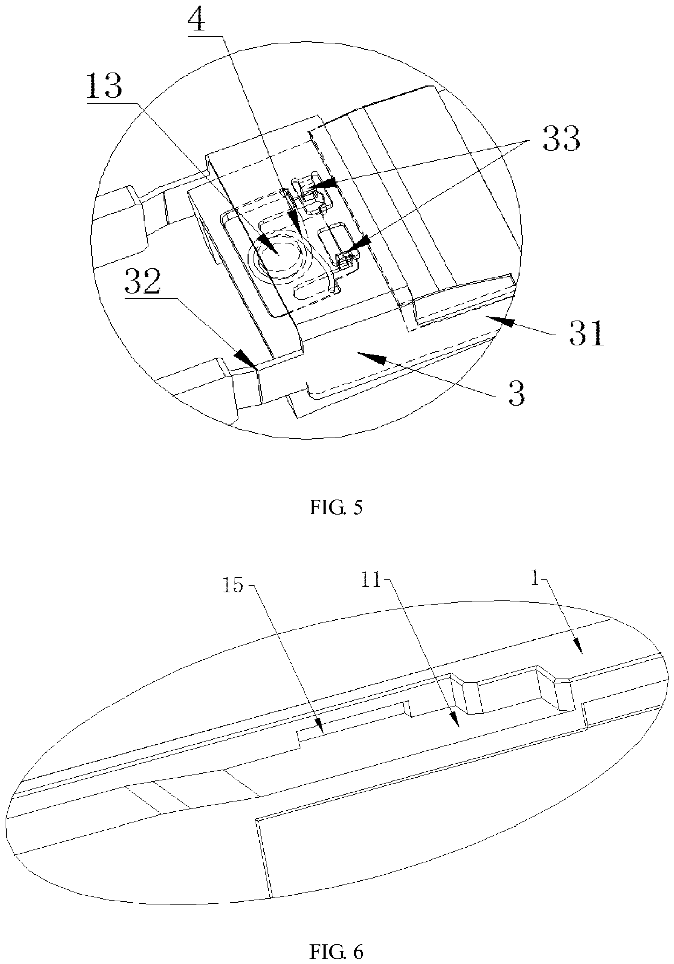

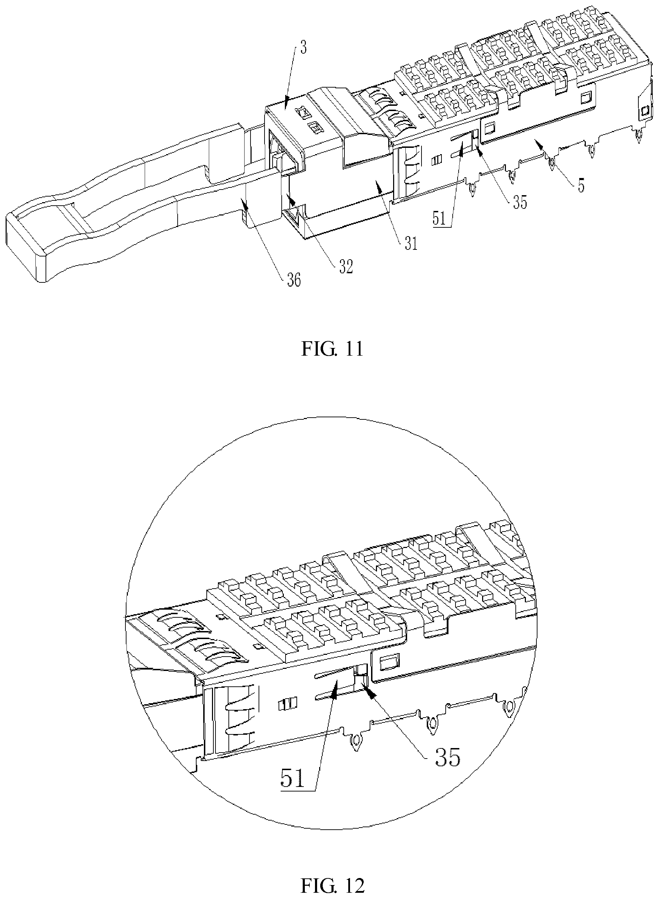

As shown in FIG. 1 to FIG. 5, and FIG. 11, a QSFP+ module straight-pull unlocking structure includes a housing formed by an upper cover 1 and a lower cover 2 that are buckled to each other, and a locking component 3 provided on the housing, where guiding grooves 11 are provided on two sides of the housing, two unlocking pieces 31 are provided at one end of the locking component 3 and a pull tab 32 is provided at the other end thereof, and the unlocking pieces 31 are engaged with and provided in the guiding grooves 11; where a spring 4 is provided on the upper cover 1, press-fit elements 33 are provided on the locking component 3 and protrude towards the upper cover 1, and the press-fit elements 33 and the spring 4 are pressed against each other. According to the structure, the housing is formed by the upper cover 1 and the lower cover 2 that are buckled to each other, the locking component 3 is provided on the housing, the spring 4 is provided on the upper cover 1, the press-fit elements 33 are provided on the locking component 3 and protrude towards the upper cover 1, and the press-fit elements 33 and the spring 4 are pressed against each other. The guiding grooves 11 are provided on the two sides of the housing, the two unlocking pieces 31 are provided at one end of the locking component 3 and the pull tab 32 is provided at the other end thereof, and the unlocking pieces 31 are engaged with and provided in the guiding grooves 11. This simplifies a pull-tab unlocking structure and a manufacturing process thereof, and helps reduce costs. The locking component 3 is made in one piece with the unlocking pieces 31 and the pull tab 32. Further, the upper cover 1 is provided with a spring groove 12, a middle portion of the spring groove 12 is provided with a positioning pin 13, the spring 4 is a torsion spring with a helical center hole, and the torsion spring is sheathed on the positioning pin 13. Using the torsion spring with a helical center hole reduces costs and also simplifies an assembly procedure. Preferably, the spring groove 12 includes a wider portion and a narrower portion, wherein two transition steps are formed on both sides at a joint between the wider portion and the narrower portion, and the positioning pin 13 is disposed in the wider portion. During assembly, the torsion spring is first sheathed on the positioning pin 13 and then two legs of the torsion spring are respectively abutted against the corresponding transition steps, so that the torsion spring is in a preloaded state. Then, the locking component 3 is inserted into the upper cover 1, and the press-fit elements 33 further press the two legs of the torsion spring, so that the elastic stress generated by the torsion spring causes the locking component 3 to always remain in an initial assembly position when no external pulling force is exerted. Lastly, all internal parts of the QSFP+ module are installed between the upper cover 1 and the lower cover 2, and the upper cover 1 and the lower cover 2 are fastened by using screws. By pulling the pull tab 32, a user can unlock the QSFP+ module from a cage receptacle 5.

The straight-pull unlocking structure in this embodiment may be commonly used for QSFP+ modules with different optical interfaces. The shape of the structure improves application compatibility. The structure can not only be used for QSFP+ modules connected to MPO and MTP optical interfaces, but also be compatible with QSFP+ modules with other optical interfaces, for example, AOC and LC receptacle optical interface modules. This greatly reduces mold costs for initial development and subsequent manufacturing costs. Further, in order to satisfy design requirements of different types of QSFP+ modules, the upper cover 1 and the lower cover 2 are fastened by using countersunk screws and are assembled in a vertical direction by placing the upper cover 1 on the lower cover 2, requiring no other assembly operations in another direction. This meets, to a greatest extent, different internal assembly sizes of QSFP+ modules with different circuits and optical designs, and protects internal parts from damages caused by internal interference during assembly due to different circuits and optical designs.

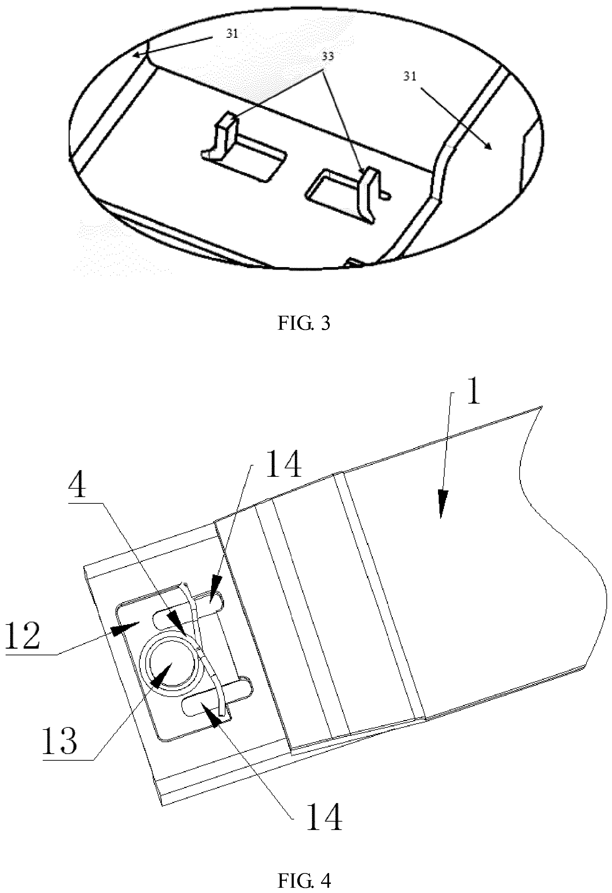

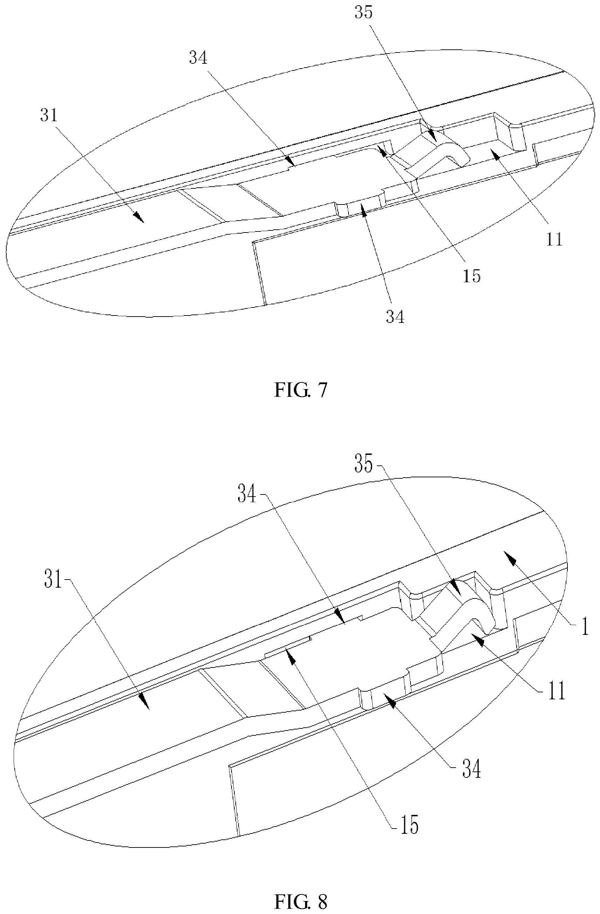

As shown in FIG. 4 to FIG. 12, press-fit element grooves 14 are further provided in the spring groove 12, and bottoms of the press-fit elements 33 are located in the press-fit element grooves 14. Specifically, the two legs of the torsion spring are located above the two press-fit element grooves 14, respectively, to make the bottoms of the press-fit elements 33 located in the press-fit element grooves 14 (that is, the bottom surfaces of the press-fit elements 33 are lower than the bottom of the spring groove 12). This can prevent the two legs of the torsion spring from slipping off from the bottoms of the press-fit elements 33, and improve stability of the straight-pull unlocking structure in the present invention. Further, spacing grooves 15 are further provided on the two sides of the housing, the spacing grooves 15 are connected to the guiding grooves 11, spacing projections 34 are provided on side surfaces of the unlocking pieces 31, and the spacing projections 34 are engaged with and provided in the spacing grooves 15. Specifically, the spacing grooves 15 may be provided on both of the upper cover 1 and the lower cover 2, and the spacing projections 34 may also be provided on both side surfaces of each of the unlocking pieces 31. The spacing projections 34 may slide horizontally back and forth within the spacing grooves 15 on the upper cover 1 and the lower cover 2, and both of an initial locked position and an unlocked position of the spacing projections 34 are limited by the length of the spacing grooves 15. Further, unlocking projections 35 are provided at the ends of the unlocking pieces 31. Specifically, a distance between spring clips 51 on both sides of the cage receptacle 5 is less than a width of the housing, so that the unlocking projections 35 get stuck and the QSFP+ module cannot be removed from the cage. When the pull tab 32 is pulled, the unlocking projections 35 at the ends of the unlocking pieces 31 push up the spring clips 51 of the cage receptacle 5, so as to make the distance between the spring clips 51 on both sides become greater than the width of the housing and thereby to unlock the QSFP+ module and pull it out.

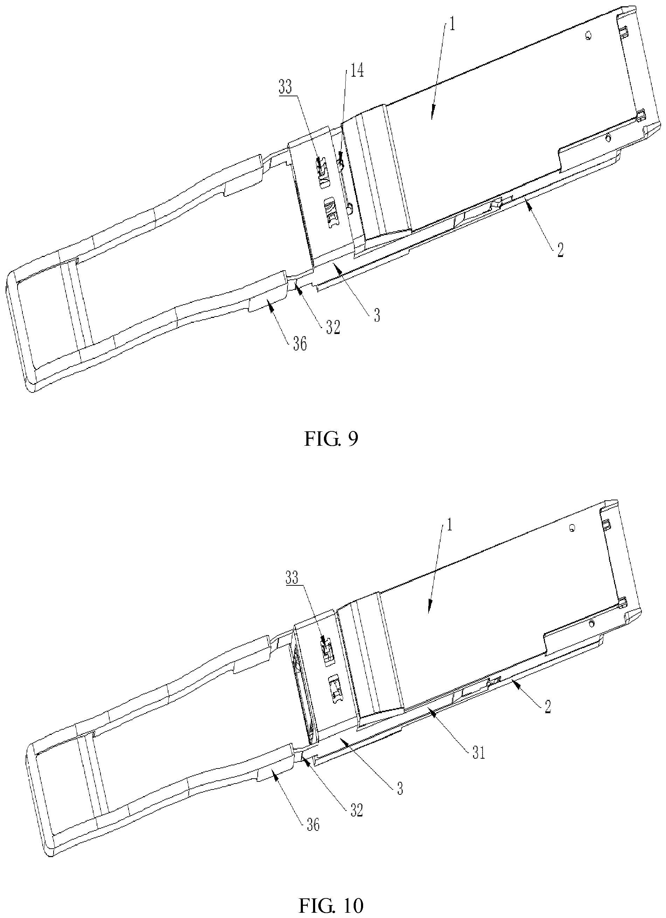

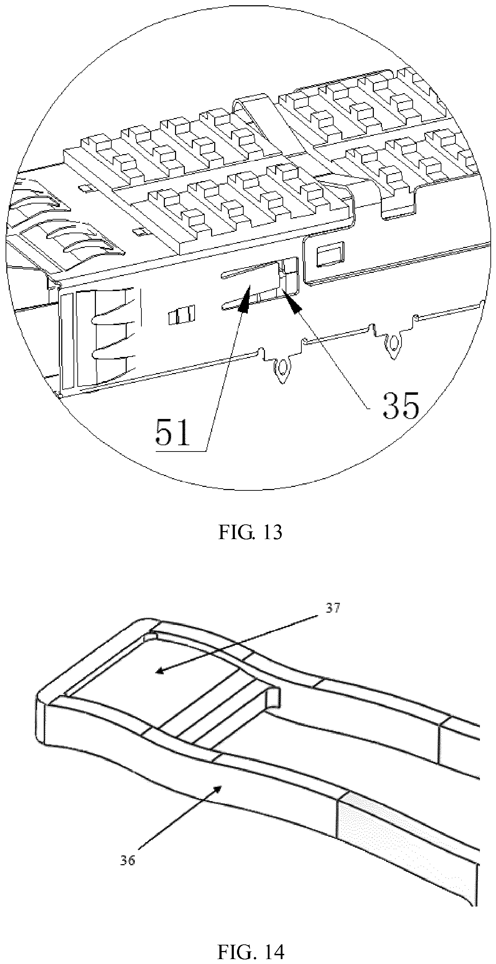

As shown in FIG. 9 to FIG. 11, and FIG. 14, a pull-tab sleeve 36 is provided around the pull tab 32, the pull tab 32 is enclosed in the pull-tab sleeve 36, and a streamlined curved surface 37 is disposed at the rear end of the pull-tab sleeve 36. Preferably, the pull tab 32 in this embodiment uses a curved tab made of sheet metal, and the pull-tab sleeve 36 is a plastic sleeve. The sheet metal pull tab 32 is sheathed with the pull-tab sleeve 36 by means of one-step thermoplastic processing. To be more user-friendly, the streamlined curved surface 37 at the rear end of the pull-tab sleeve 36 is designed to simulate the bending arc shape of human fingers, facilitating the unlocking operation using the pull tab 32. The one-step thermoplastic processing of sheathing the sheet metal pull tab 32 with the plastic pull-tab sleeve 36 simplifies an assembly procedure of the pull tab 32 and the pull-tab sleeve 36. The component obtained by means of thermoplastic processing has a more stable structure. For long-term use, a sealed joint wrapped in plastic is less prone to aging, oxidation, and fall-off.

It should be understood that the foregoing embodiments are merely intended for describing technical solutions of the present invention, but not for limiting the present invention which is defined by the appended claims.

## Claims

1. A QSFP+ module straight-pull unlocking structure, comprising a housing formed by an upper cover (1) and a lower cover (2) that are buckled to each other, and a locking component (3) provided on the housing, wherein
guiding grooves (11) are provided on two sides of the housing, two unlocking pieces (31) are provided at one end of the locking component (3) and a pull tab (32) is provided at the other end thereof, the unlocking pieces (31) are engaged with and provided in the guiding grooves (11),
a spring (4) is provided on the upper cover (1), press-fit elements (33) are provided on the locking component (3), and the press-fit elements (33) and the spring (4) are pressed against each other, and
the press-fit elements (33) protrude towards the upper cover (1),
**characterized in that**
the locking component (3) is made in one piece with the unlocking pieces (31) and the pull tab (32).

2. The straight-pull unlocking structure according to claim 1, wherein the upper cover is provided with a spring groove (12), a middle portion of the spring groove is provided with a positioning pin (13), the spring (4) is a torsion spring with a helical center hole, and the torsion spring is sheathed on the positioning pin (13).

3. The straight-pull unlocking structure according to claim 2, wherein press-fit element grooves (14) are further provided in the spring groove (12), and bottoms of the press-fit elements (33) are located in the press-fit element grooves (14).

4. The straight-pull unlocking structure according to claim 3, wherein spacing grooves (15) are further provided on the two sides of the housing, the spacing grooves (15) are connected to the guiding grooves (11), spacing projections (34) are provided on side surfaces of the unlocking pieces (31), and the spacing projections (34) are engaged with and provided in the spacing grooves (15).

5. The straight-pull unlocking structure according to claim 4, wherein unlocking projections (35) are provided at the ends of the unlocking pieces (31).

6. The straight-pull unlocking structure according to claim 5, wherein a pull-tab sleeve (36) is provided around the pull tab, the pull tab is enclosed in the pull-tab sleeve, and a streamlined curved surface is disposed at the rear end of the pull-tab sleeve.

## Patentansprüche

1. Entriegelungsstruktur mit geradem Zug eines QSFP+-Moduls, umfassend ein Gehäuse, das aus einer oberen Abdeckung (1) und einer unteren Abdeckung (2) gebildet ist, die aneinander geschnallt sind, und eine Verriegelungskomponente (3), die an dem Gehäuse bereitgestellt ist, wobei
Führungsnuten (11) an zwei Seiten des Gehäuses bereitgestellt sind, zwei Entriegelungsstücke (31) an einem Ende der Verriegelungskomponente (3) bereitgestellt sind und eine Zuglasche (32) an dem anderen Ende davon bereitgestellt ist, wobei die Entriegelungsstücke (31) mit den Führungsnuten (11) in Eingriff stehen und darin bereitgestellt sind,
eine Feder (4) an der oberen Abdeckung (1) bereitgestellt ist, Einpresselemente (33) an der Verriegelungskomponente (3) bereitgestellt sind, und die Einpresselemente (33) und die Feder (4) gegeneinander gedrückt sind, und
die Einpresselemente (33) in Richtung der oberen Abdeckung (1) ragen,
**dadurch gekennzeichnet, dass**
die Verriegelungskomponente (3) aus einem Stück mit den Entriegelungsstücken (31) und der Zuglasche (32) hergestellt ist.

2. Entriegelungsstruktur mit geradem Zug nach Anspruch 1, wobei die obere Abdeckung mit einer Federnut (12) bereitgestellt ist, ein mittlerer Abschnitt der Federnut mit einem Positionierungsstift (13) bereitgestellt ist, die Feder (4) eine Torsionsfeder mit einem spiralförmigen Mittelloch ist, und die Torsionsfeder auf dem Positionierungsstift (13) ummantelt ist.

3. Entriegelungsstruktur mit geradem Zug nach Anspruch 2, wobei Einpresselementnuten (14) ferner in der Federnut (12) bereitgestellt sind und sich Böden der Einpresselemente (33) in den Einpresselementnuten (14) befinden.

4. Entriegelungsstruktur mit geradem Zug nach Anspruch 3, wobei ferner Abstandsnuten (15) an den zwei Seiten des Gehäuses bereitgestellt sind, die Abstandsnuten (15) mit den Führungsnuten (11) verbunden sind, Abstandsvorsprünge (34) an den Seitenflächen der Entriegelungsstücke (31) bereitgestellt sind und die Abstandsvorsprünge (34) mit den Abstandsnuten (15) in Eingriff stehen und darin bereitgestellt sind.

5. Entriegelungsstruktur mit geradem Zug nach Anspruch 4, wobei Entriegelungsvorsprünge (35) an den Enden der Entriegelungsstücke (31) bereitgestellt sind.

6. Entriegelungsstruktur mit geradem Zug nach Anspruch 5, wobei eine Zuglaschenhülse (36) um die Zuglasche herum bereitgestellt ist, die Zuglasche in der Zuglaschenhülse eingeschlossen ist und eine stromlinienförmige gekrümmte Oberfläche an dem hinteren Ende der Zuglaschenhülse angeordnet ist.

## Revendications

1. Structure de déverrouillage à traction alignée de module QSFP+, comprenant un boîtier formé par un couvercle supérieur (1) et un couvercle inférieur (2) qui sont attachés l'un à l'autre, et un composant de verrouillage (3) disposé sur le boîtier,
des rainures de guidage (11) étant disposées sur deux côtés du boîtier, deux pièces de déverrouillage (31) étant disposées au niveau d'une extrémité du composant de verrouillage (3) et une tirette (32) étant disposée au niveau de l'autre extrémité de celui-ci, les pièces de déverrouillage (31) étant en prise avec les rainures de guidage (11) et disposées dans celles-ci,
un ressort (4) étant disposé sur le couvercle supérieur (1), des éléments ajustés par pression (33) étant disposés sur le composant de verrouillage (3), et lesdits éléments ajustés par pression (33) et ledit ressort (4) étant pressés les uns contre les autres, et
lesdits éléments ajustés par pression (33) faisant saillie vers le couvercle supérieur (1),
**caractérisée en ce que**
le composant de verrouillage (3) est réalisé d'une seule pièce avec les pièces de déverrouillage (31) et la tirette (32).

2. Structure de déverrouillage à traction alignée selon la revendication 1, ledit couvercle supérieur étant doté d'une rainure de ressort (12), une partie médiane de la rainure de ressort étant dotée d'une goupille de positionnement (13), ledit ressort (4) étant un ressort de torsion avec un trou central hélicoïdal, et ledit ressort de torsion étant gainé sur la goupille de positionnement (13).

3. Structure de déverrouillage à traction alignée selon la revendication 2, des rainures d'élément ajusté par pression (14) étant en outre ménagées dans la rainure de ressort (12), et lesdites parties inférieures des éléments ajustés par pression (33) étant situées dans les rainures d'élément ajusté par pression (14).

4. Structure de déverrouillage à traction alignée selon la revendication 3, des rainures d'espacement (15) étant en outre ménagées sur les deux côtés du boîtier, lesdites rainures d'espacement (15) étant reliées aux rainures de guidage (11), des saillies d'espacement (34) étant disposés sur les surfaces latérales des pièces de déverrouillage (31), et lesdites saillies d'espacement (34) étant en prise avec les rainures d'espacement (15) et disposées dans celles-ci.

5. Structure de déverrouillage à traction alignée selon la revendication 4, des saillies de déverrouillage (35) étant disposées au niveau des extrémités des pièces de déverrouillage (31).

6. Structure de déverrouillage à traction alignée selon la revendication 5, un manchon de tirette (36) étant disposé autour de la tirette, ladite tirette étant enfermée dans le manchon de tirette, et une surface courbe profilée étant disposée à l'extrémité arrière du manchon de tirette.
